# EUROPEAN PATENT APPLICATION

(11) **EP 1 674 992 A1**
(43) Date of publication of application: **28.06.2006**
(21) Application number: 05112488.1
(22) Date of filing: 20.12.2005
(51) Int. Cl.: G06F 9/44, G06F 11/00

(54) **Replicated virtual machine**

(30) Priority: 22.12.2004 US 21983
(71) Applicant: Microsoft Corporation, Redmond WA 98052 (US)
(72) Inventor: Douceur, John R., 98052, Redmond (US); Howell, Jonathan R., 98052, Redmond (US)
(74) Representative: Grünecker, Kinkeldey, Stockmair & Schwanhäusser Anwaltssozietät

(57) **Abstract**

A mechanism that enables a nondeterministic client-server application to be run as a replicated state machine without requiring the application to be modified. A replicated state machine substrate is utilized to coordinate the execution of multiple virtual machine monitors, each of which runs an identical copy of an operating system and server application. The virtual machine monitors each act as deterministic state machines, virtualizing state machine characteristics and behaviors.

## Description

### FIELD OF THE INVENTION

This invention relates generally to computers and, more particularly, relates to distributed computing.

### BACKGROUND OF THE INVENTION

An advantage of distributed systems is the ability to continue to operate in the face of physical difficulties that would cripple a single, monolithic computing device. Such difficulties could include: sustained power outages, inclement weather, flooding, terrorist activity, and the like.

To compensate for the increased risk that individual member computing devices may become disconnected from the network, turned off, suffer a system malfunction, or otherwise become unusable, redundancy can be used to allow the distributed computing system to remain operational. Thus, the information stored or process executed on any one computing device can be redundantly stored on additional computing devices, allowing the information to remain accessible, even if one of the computing devices fails.

A distributed computing system can practice complete redundancy, in which every device within the system performs identical tasks and stores identical information. Such a system can allow users to continue to perform useful operations even if almost half of the devices should fail. Alternatively, such a system can be used to allow multiple copies of the same information to be distributed throughout a geographic region. For example, a multi-national corporation can establish a worldwide distributed computing system.

However, distributed computing systems can be difficult to maintain due to the complexity of properly ensuring that the individual devices comprising the system perform identical operations in the same order. To facilitate this often difficult task, a state machine approach is often used to coordinate activity among the individual devices. A state machine can be described by a set of states, a set of commands, a set of responses, and client commands that link a response/state pair to each command/state pair. A state machine can execute a command by changing its state and producing a response. Thus, a state machine can be completely described by its current state and the action it is about to perform.

The current state of a state machine is, therefore, dependent upon its previous state, the commands performed since then, and the order in which those commands were performed. To maintain synchronization between two or more state machines, a common initial state can be established, and each state machine can, beginning with the initial state, execute the identical commands in the identical order. Therefore, to synchronize one state machine to another, a determination of the commands performed by the other state machine needs to be made. The problem of synchronization, therefore, becomes a problem of determining the order of the commands performed, or, more specifically, determining the particular command performed for a given step.

A distributed computing system, as a whole, can be modeled as a state machine. Thus, a distributed computing system implementing complete redundancy can have each of the devices replicate the state of the overall system, so that each device hosts its own "replica" of the same state machine, called a replicated state machine, or RSM. Such a system requires that each RSM maintain the same state. If some replicas believe that one client command was executed, while a second group of replicas believes that a different client command was executed, the overall system no longer operates as a single state machine.

A major disadvantage of a replicated state machine computer system is that a server application must be architected as a state machine. This requirement may be very difficult to satisfy for an existing application that was not originally written as a state machine, and/or if the application was written with multiple threads of control. Even writing a new program as a deterministic state machine is not simple, because this style of programming is unfamiliar to many programmers and because it precludes the use of nondeterministic abstractions, such as threads.

### BRIEF SUMMARY OF THE INVENTION

This section presents a simplified summary of some embodiments of the invention. This summary is not an extensive overview of the invention. It is not intended to identify key/critical elements of the invention or to delineate the scope of the invention. Its sole purpose is to present some embodiments of the invention in a simplified form as a prelude to the more detailed description that is presented later.

In accordance with an embodiment, a mechanism is provided that enables a nondeterministic client-server application to be run as a replicated state machine without requiring the application to be modified. A replicated state machine substrate is utilized to coordinate the execution of multiple virtual machine monitors, each of which runs a copy of an operating system and the server application. In an embodiment, the copies of the operating system and the server application are identical. Each virtual machine monitor acts as a deterministic state machine, virtualizing state machine characteristics and behaviors.

In accordance with an embodiment, an execution protocol is defined in which time is partitioned into a sequence of discrete intervals, and within each interval, the agreement protocol determines whether any messages are to be processed and, if there are any, the order in which to process them. Once the agreement protocol completes its decision, the virtual machine is allowed to execute for a determinate length of execution (hereinafter "deterministic execution chunking"). Using deterministic execution chunking to divide program execution into intervals causes each virtual machine to execute to the same state.

In accordance with an embodiment, the specific mechanism by which the virtual machine performs deterministic execution chunking is determined in part by the processor architecture. If no direct mechanism for running for a determinate length of execution is provided by the processor, the virtual machine may be allowed to run for a length of time that is guaranteed to perform no more execution than the target amount. Additional, perhaps shorter, time periods of execution may be used until the target is sufficiently close. The virtual machine is then single-stepped to the target execution point. As an alternative or an addition to this system, binary rewriting may be used. In addition, single stepping alone, virtualizing of a processor by the virtual machine monitor, or any combination of these may be used. Single stepping and binary rewriting are well-known techniques.

The agreement protocol is utilized with deterministic execution chunking to schedule execution of virtual network interrupt handlers. In this manner, network devices may be virtualized deterministically. Similar devices whose behavior is nondeterministic typically because the devices involve some external input, such as network communication, may be handled in a similar manner. These devices are collectively referred to herein as "network virtual devices," although the devices may actually be local.

In accordance with an embodiment, operation of a local device is virtualized by the virtual machine monitor to behave deterministically. A local virtual device is programmed by the virtual machine to perform an operation, and the virtual machine monitor deterministically estimates the time to perform the operation on the corresponding actual device. The virtual machine is interrupted after the estimated period of execution, and a determination is made whether the operation has been finished. If so, the interrupt for the operation is delivered to the virtual machine. If not, then the virtual machine is paused until the operation is complete, and then the interrupt is delivered. Similar devices, whose behavior is deterministic with respect to a virtual machine but whose timing might not be, may be treated similarly. These devices are referred to herein as "local virtual devices," although such devices are not necessarily local.

In accordance with an embodiment, a periodic virtual clock interrupt is provided that is deterministic with respect to the virtual machine's execution. In accordance with the embodiment, the interrupt is triggered after a fixed length of virtual machine execution, using as the techniques described above. That is, available interrupts, binary rewriting, single stepping, time estimating, virtualizing of a processor by the virtual machine monitor, or a combination of these may be used. Thus, time is measured with respect to execution instead of actual real time.

In accordance with an embodiment, a virtual real-time clock is provided that is deterministic with respect to the virtual machine's execution. In the embodiment, the virtual real-time clock value is the value of the execution counter of the virtual machine, which may be a retired-instruction counter or whatever execution counter is available on the particular processor architecture. If the processor architecture has an execution counter with a small number of bits, such that it risks wrapping, this counter may be extended in software using a well known technique.

The methods above to provide deterministic network virtual devices and local virtual devices may be used for most operations that the server application will encounter. For example, peripheral devices may be treated as network devices. An exception would be the real-time clock described above, which is treated as a local device but utilizes external synchronization.

### BRIEF DESCRIPTION OF THE DRAWINGS

While the appended claims set forth the features of the invention with particularity, the invention and its advantages are best understood from the following detailed description taken in conjunction with the accompanying drawings, of which:

Figure 1 is a schematic diagram generally illustrating an exemplary computer system usable to implement an embodiment of the invention;

Figure 2 is a schematic diagram generally illustrating a prior art replicated state machine-based client-server computer system;

Figure 3 is a timing diagram representing tasks handled by a prior art replicated state machine server substrate;

Figure 4 is a diagrammatic representation of an example of an interface that may be presented by an RSM server substrate;

Figure 5 is a schematic diagram generally illustrating a replicated state machine-based client-server computer system in accordance with an embodiment;

Figure 6 is a timing diagram representing tasks handled by an RSM server substrate in accordance with an embodiment;

Figure 7 is a flow chart generally representing steps for choosing a mechanism by which a virtual machine is operated a determinate length of execution in accordance with an embodiment of the invention;

Figure 8 is a flow chart generally representing steps for a process of handling a agreement protocol for a network interrupt in accordance with an embodiment;

Figure 9 is a flow chart generally representing steps for handling interrupts from local virtual devices, such as a disk, in accordance with an embodiment; and

Figure 10 is more detailed diagrammatic representation of the virtual and physical disk subsystems of the server computer in FIG. 5.

### DETAILED DESCRIPTION OF THE INVENTION

Embodiments within the scope of the present invention include computer-readable media for carrying or having computer-executable instructions or data structures stored thereon. Such computer-readable media can be any available media that can be accessed by a general-purpose or special-purpose computer. By way of example, and not limitation, such computer-readable media may comprise physical computer-readable media such as RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general-purpose or special-purpose computer.

When information is transferred or provided over a network or another communications connection (either hardwired, wireless, or a combination of hardwired or wireless) to a computer system, the computer system properly views the connection as a computer-readable medium. Thus, any such connection is properly termed a computer-readable medium. Combinations of the above should also be included within the scope of computer-readable media. Computer-executable instructions comprise, for example, any instructions and data which cause a general-purpose computer system, special-purpose computer system, or special-purpose processing device to perform a certain function or group of functions. The computer-executable instruction may be, for example, binaries, intermediate format instructions such as assembly language, or even source code.

In this document, a "logical communication link" is defined as any communication path that can enable the transport of electronic data between two entities such as computer systems or modules. The actual physical representation of a communication path between two entities is not important and can change over time. A logical communication link can include portions of a system bus, a local area network (e.g., an Ethernet network), a wide area network, the Internet, combinations thereof, or portions of any other path that may facilitate the transport of electronic data. Logical communication links can include hardwired links, wireless links, or a combination of hardwired links and wireless links. Logical communication links can also include software or hardware modules that condition or format portions of electronic data so as to make them accessible to components that implement the principles of the present invention. Such modules include, for example, proxies, routers, firewalls, switches, or gateways. Logical communication links may also include portions of a virtual network, such as, for example, Virtual Private Network ("VPN") or a Virtual Local Area Network ("VLAN").

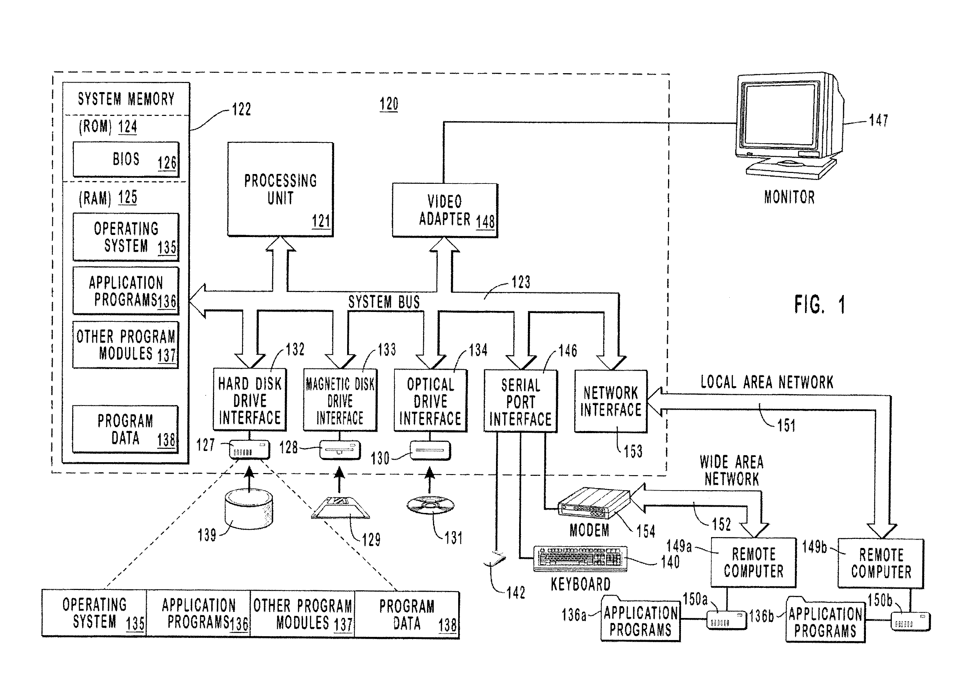

Figure 1 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions represents examples of corresponding acts for implementing the functions described in such steps.

With reference to Figure 1, an exemplary system for implementing the invention includes a general-purpose computing device in the form of a conventional computer 120, including a processing unit 121, a system memory 122, and a system bus 123 that couples various system components including the system memory 122 to the processing unit 121. The system bus 123 may be any of several types of bus structures including a memory bus or memory controller, a peripheral bus, and a local bus using any of a variety of bus architectures. The system memory includes read only memory (ROM) 124 and random access memory (RAM) 125. A basic input/output system (BIOS) 126, containing the basic routines that help transfer information between elements within the computer 120, such as during start-up, may be stored in ROM 124.

The computer 120 may also include a magnetic hard disk drive 127 for reading from and writing to a magnetic hard disk 139, a magnetic disk drive 128 for reading from or writing to a removable magnetic disk 129, and an optical disk drive 130 for reading from or writing to removable optical disk 131 such as a CD-ROM or other optical media. The magnetic hard disk drive 127, magnetic disk drive 128, and optical disk drive 130 are connected to the system bus 123 by a hard disk drive interface 132, a magnetic disk drive-interface 133, and an optical drive interface 134, respectively. The drives and their associated computer-readable media provide nonvolatile storage of computer-executable instructions, data structures, program modules, and other data for the computer 120. Although the exemplary environment described herein employs a magnetic hard disk 139, a removable magnetic disk 129, and a removable optical disk 131, other types of computer readable media for storing data can be used, including magnetic cassettes, flash memory cards, digital video disks, Bernoulli cartridges, RAMs, ROMs, and the like.

Program code means having one or more program modules may be stored on the hard disk 139, magnetic disk 129, optical disk 131, ROM 124 or RAM 125, including an operating system 135, one or more application programs 136, other program modules 137, and program data 138. A user may enter commands and information into the computer 120 through keyboard 140, pointing device 142, or other input devices (not shown), such as a microphone, joy stick, game pad, satellite dish, scanner, or the like. These and other input devices are often connected to the processing unit 121 through a serial port interface 146 coupled to system bus 123. Alternatively, the input devices may be connected by other interfaces, such as a parallel port, a game port, or a universal serial bus (USB). A monitor 147 or another display device is also connected to system bus 123 via an interface, such as video adapter 148. In addition to the monitor, personal computers typically include other peripheral output devices (not shown), such as speakers and printers.

The computer 120 may operate in a networked environment using logical communication links to one or more remote computers, such as remote computers 149a and 149b. Remote computers 149a and 149b may each be another personal computer, a client, a server, a router, a switch, a network PC, a peer device or other common network node, and can include many or all of the elements described above relative to the computer 120, although only memory storage devices 150a and 150b and their associated application programs 136a and 136b have been illustrated in Figure 1. The logical communication links depicted in Figure 1 include local area network ("LAN") 151 and wide area network ("WAN") 152 that are presented here by way of example and not limitation. Such networking environments are commonplace in office-wide or enterprise-wide computer networks, intranets and the Internet.

When used in a LAN networking environment (e.g. an Ethernet network), the computer 120 is connected to LAN 151 through a network interface or adapter 153, which can be a wired or wireless interface. When used in a WAN networking environment, the computer 120 may include a wired link, such as, for example, modem 154, a wireless link, or other means for establishing communications over WAN 152. The modem 154, which may be internal or external, is connected to the system bus 123 via the serial port interface 146. In a networked environment, program modules depicted relative to the computer 120, or portions thereof, may be stored in at a remote memory storage device. It will be appreciated that the network connections shown are exemplary and other means of establishing communications over wide area network 152 may be used.

While Figure 1 illustrates an example of a computer system that may implement the principles of the present invention, any computer system may implement the features of the present invention. In the description and in the claims, a "computer system" is defined broadly as any hardware component or components that are capable of using software to perform one or more functions. Examples of computer systems include desktop computers, laptop computers, Personal Digital Assistants ("PDAs"), telephones (both wired and mobile), wireless access points, gateways, firewalls, proxies, routers, switches, hand-held devices, multi-processor systems, microprocessor-based or programmable consumer electronics, network PCs, minicomputers, mainframe computers, or any other system or device that has processing capability.

Those skilled in the art will also appreciate that the invention may be practiced in network computing environments using virtually any computer system configuration. The invention may also be practiced in distributed system environments where local and remote computer systems, which are linked (either by hardwired links, wireless links, or by a combination of hardwired and wireless links) through a network, both perform tasks. In a distributed system environment, program modules may be located in both local and remote memory storage devices.

In general, the present invention has application to a distributed computer system. An increasingly common usage for distributed computing systems is that of a network server that can act as a central storage repository for various forms of information. Such a distributed system seeks to replicate the central store on all of its constituent devices so that every client seeking to communicate with the central storage can find a convenient and efficient device with which to communicate. Furthermore, because of the distributed nature of the system, local events such as power outages, floods, political unrest, and security intrusions may only affect a few computing devices, allowing the overall system to continue to operate properly and provide access to information and other services to clients.

A distributed computing system acting as a server can be especially useful for serving a large amount of information to a diverse set of clients, such as a central database for a multi-national corporation, or a popular World Wide Web site. In such situations, a large number of clients can request information from the distributed computing system acting as a server. By implementing the server functionality across multiple devices, the server as a whole is far less prone to failure due to the increased redundancy.

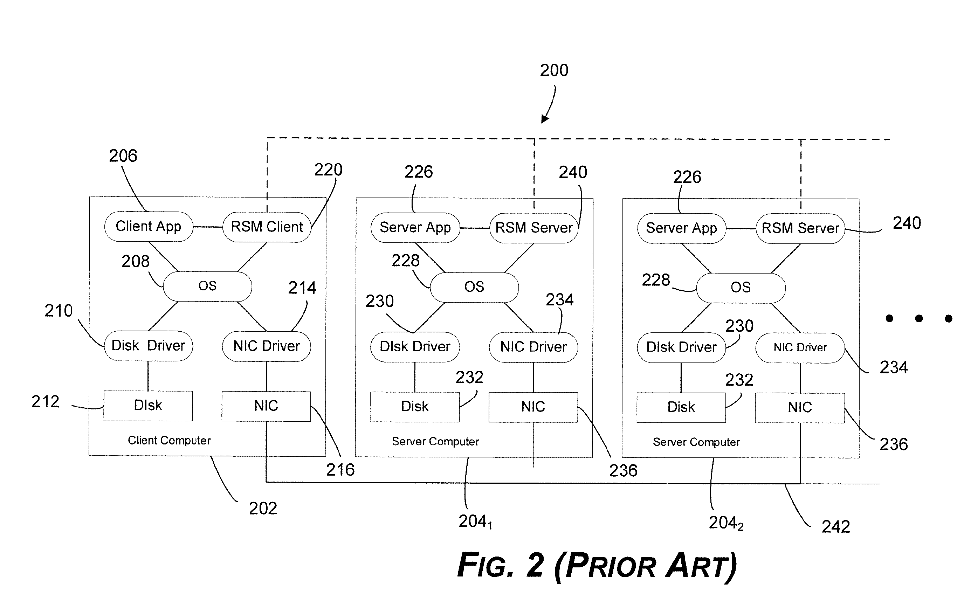

FIG. 2 shows a computer system 200 having a client computer 202 and two server computers 204₁, 204₂. Although only a single client computer 202 is shown, several may be included in the computer system 200. Likewise, although only two server computers 204 are shown, more are typically used in a replicated network, as indicated by the dots following the second server computer 204₂. The client computer 202 may be, for example, the computer 120, and the server computers 204₁, 204₂ may be the remote computers 149a and 149b, described above. Although described as clients and servers, the client computer 202 may also serve as a server to other computers, and the server computers 204₁ and 204₂ may act as clients to other servers.

The computer system 200 shown in FIG. 2 is a prior art replicated state machine-based client-server computer system. The client computer 202 includes a client application 206, an operating system 208, such as the operation system 135, a disk driver 210 for communicating with a disk 212, and a network interface card (NIC) driver 214 for communicating with a NIC 216. The client computer 202 also includes a replicated state machine (RSM) client substrate 220.

Each of the server computers 204₁ and 204₂ includes a server application 226, an operating system 228, a disk driver 230, and a hard disk 232. In addition, the server computers 204₁ and 204₂ each include a NIC driver 234 and a NIC 236. Each of the server computers includes a replicated state machine (RSM) server substrate 240.

The dashed line in FIG. 2 indicates that the client application 206 communicates with the server applications 226 via the replicated state machine client substrate 220 and the replicated state machine server substrate 240. The actual path of this communication involves the operating systems 208, 228, the network interface card (NIC) drivers 214, 234, and the network interface cards (NIC) 216, 236. The network interface cards 216, 236 are connected by a logical communication link 242.

As is known, the RSM client substrate 220 ensures that a message sent by the client application 206 is received by the replicated server applications 226. The RSM client substrate 220 does this by sending the message to the server application 226 on each server computer 204. However, as an optimization, it may first send the message to only one server application 226, and if the server application does not reply correctly, it may then send the message to all server applications 226. The RSM client substrate 220 also collects replies from the server applications 226 and passes a single aggregated reply to the client application 206.

As an alternative to the replicated state machine system shown in FIG. 2, a redirector computer (not shown, but known in the art) may act as a liaison between the client and server computers 202, 204. In such a computer system, the client computer 202 does not include an RSM substrate. Instead, the client computer 202 sends network messages to the redirector computer, which replicates the messages and sends them to the server computers 204. The redirector computer also collects multiple messages from the server computers 204, which it aggregates into a single message that is sent to the client computer 202. This redirector computer may be replicated so it does not constitute a single point of possible failure.

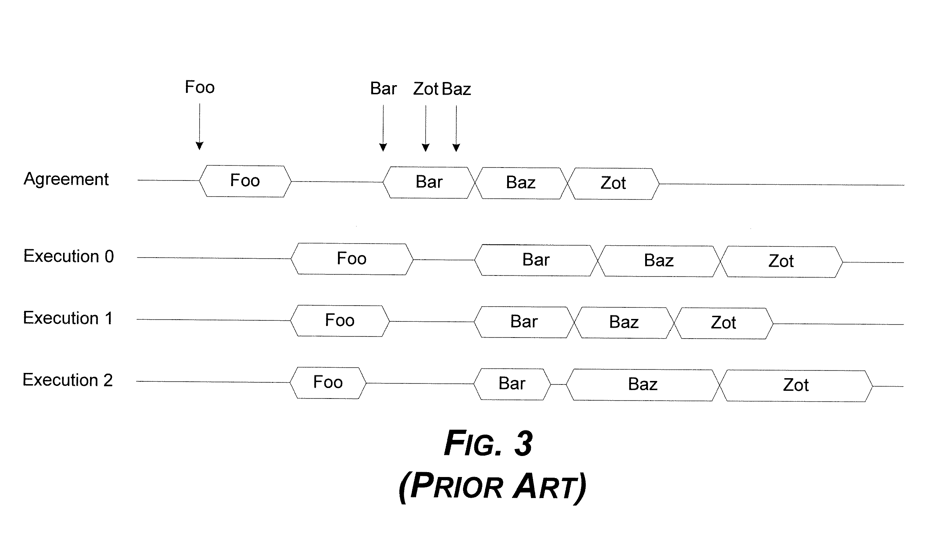

One task of the RSM server substrate 240 is to establish a task ordering for the server's operation. FIG. 3 illustrates an example timing diagram for tasks handled by a RSM server substrate, such as the RSM server substrate 240. FIG. 2 illustrates an arbitrary number of servers; FIG. 3 shows the timing of operations on a specific set of three servers. The downward-pointing arrows indicate requests for operations. Each request may be a request from a client application 206, or may be a request triggered by a server-based timer. Each RSM server substrate 240 performs a protocol to determine an agreed order for the request, and then each server computer 204₁, 204₂ executes the request. For example, as shown in FIG. 3, when request Foo is received, this receipt triggers the RSM server substrate 240 to run its agreement protocol, which decides that Foo should be the next request to execute. Following the agreement, each of the server computers 204₁, 204₂, executes operation Foo. A similar sequence of events happens when request Bar is received.

Requests Zot and Baz are received while the agreement protocol is still deciding the request Bar. Once the agreement for request Bar is received, the RSM server substrate 226 then decides whether Zot or Baz should be processed next. In the example, the substrate chooses Baz, and in the subsequent agreement step, the substrate chooses Zot.

In the example given in FIG. 3, the replicas performing executions 0 and 1 execute operations slower than the agreement protocol makes decisions. To prevent the agreement from getting arbitrarily far ahead of the execution, contemporary RSM server substrates 226 postpone agreement if the agreement process gets more than a given operation count ahead of the execution.

As FIG. 3 shows, server computers 204 may execute operations at differing rates. This may be because the different server computers 204₁, 204₂ have different processor speeds, or it may be because they have varying workloads other than the workload of running the replicated server application 226. For example, as shown in FIG. 3, the replica performing execution 2 executes operations Foo and Bar relatively quickly, but then it executes operations Baz and Zot slowly, perhaps because another process began competing for resources.

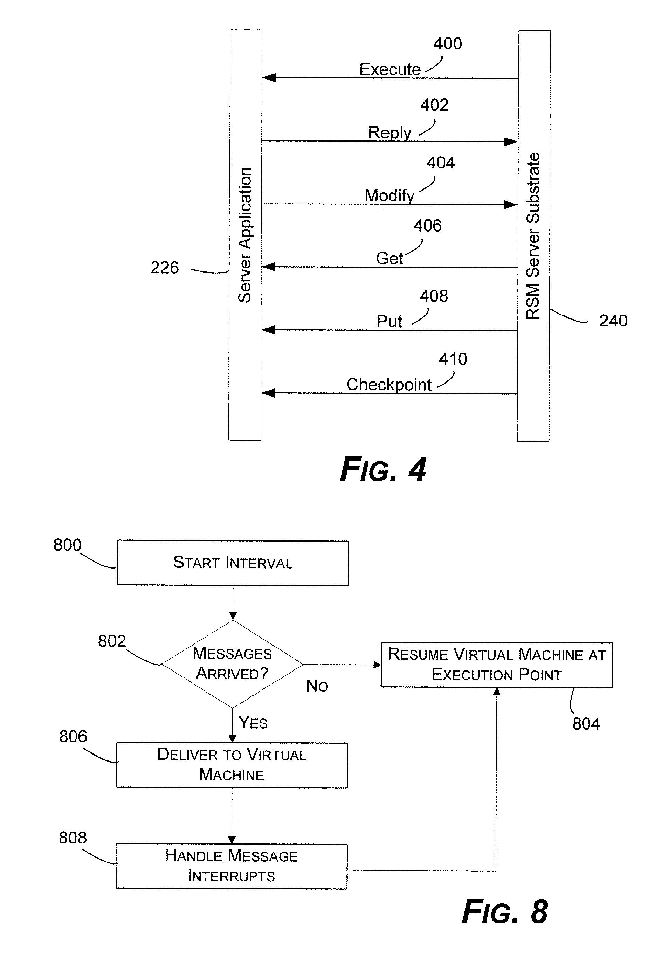

FIG. 4 illustrates an example of an interface that may be presented by an RSM server substrate, such as the RSM server substrate 240. The RSM server substrate 240 uses an execute call 400 to tell the server application 226 to update its state. This *execute* call 400 includes the client message that triggered the update. The server application 226 uses a reply call 402 to indicate a message to send to the client application 206.

The RSM server substrate 240 tracks the state of the server application 226. Before the server application 226 modifies any part of its state, it uses a *modified* call 404 to warn the RSM server substrate 240 about the part of the server application's state that the server application is about to change. The RSM server substrate 240 uses a get call 406 to retrieve the value of any part of the state of the server application 226, and the RSM server substrate uses a put call 408 to change the value of a part of the state of the server application 226.

In the example shown in FIG. 4, the RSM server substrate 240 uses a checkpoint call 410 to tell the server application 226 to save a checkpoint of its state. Saving a checkpoint of the server application's state permits the server application 226 to restart to the state of its most recent checkpoint if the server application were to crash. Checkpoints are saved atomically, and they are coordinated with the RSM server substrate's saving of its own internal state.

A major disadvantage of the prior art replicated state machine computer system 200 described with reference to FIGS. 2-4 is that this system requires the server application 226 to interact with the RSM server substrate 240 in a rigidly defined manner, such as that described above. The server application 226 must be architected as a state machine that updates its state only in response to messages received via the RSM server substrate 240 from client applications 206, or from a server-based timer. In addition, messages to client computers 202 must be sent via the RSM server substrate 240 rather than directly. Furthermore, the server application 226 must be able to export its state to the RSM server substrate 240. In addition, it must be able to import its state from the RSM server substrate 240, and the server application 226 must ensure that all of its actions are deterministic. Further still, the server application 226 must be able to checkpoint its state in a manner that is both atomic and coordinated with the saving of the state of the RSM server substrate 240.

These requirements may be very difficult to satisfy for an existing application that was not originally written as a state machine. They may be extremely difficult to satisfy if the application was written with multiple threads of control. Even writing a new program as a deterministic state machine is not simple, because this style of programming is unfamiliar to many programmers and because it precludes the use of nondeterministic abstractions, such as threads.

In accordance with an embodiment, the present invention utilizes virtual machine monitors to provide state machines for server applications. The virtual machine monitors are configured to cause an application that is not written in a deterministic manner to behave deterministically.

A virtual machine monitor is a kernel-mode driver running in a host operating system on a computer. Alternatively, a virtual machine monitor may be implemented with a computer having a special chip that is capable of running multiple operating systems simultaneously, such as in high end servers providing partitioning. Examples would be higher IBM's higher-end POWER4 and POWER5 processors and competing server designs from Sun Microsystems, Hewlett-Packard and Intel. A virtual machine monitor typically has access to the physical computer processor and manages resources between the host operation system on a computer and a "virtual machine" on the computer. As is known, a virtual machine is essentially a computer within a computer and is implemented in software. A virtual machine emulates a complete hardware system, from processor to network card, in a self-contained, isolated software environment, enabling the simultaneous operation of otherwise incompatible operating systems.

Alternatively, a virtual machine monitor may be implemented with a computer having a special chip that is capable of running multiple operating systems simultaneously, such as in high end servers providing partitioning. Examples would be higher IBM's higher-end POWER4 and POWER5 processors and competing server designs from Sun Microsystems, Hewlett-Packard and Intel. The management of a partition would be maintained by the virtual machine monitor, sometimes in this configuration also known as a management console.

A virtualized machine monitor presents virtualized resources to the virtualized machine. In particular, it presents virtualized disk, virtualized physical memory, virtualized network interface and so forth. Virtualized physical memory is not to be confused with virtual memory. Virtualized physical memory appears to the guest operating system as physical memory, and the guest operating system implements virtual memory on top of this virtualized physical memory. The virtual machine monitor uses the host operations system's virtual memory to implement its virtualized physical memory.

As is known, in use of virtual machines, the virtual machine process is treated much like another application on the computer, and shares use of a computer's processor with other applications. To minimize overhead, a virtual machine monitor typically passes computer operations directly from the virtual machine to the processor. However, in some instances it may be useful for the virtual machine monitor not to pass operation directly to the processor. In such circumstances, the virtual machine monitor traps instructions to simulate the behavior of privileged instructions and to redirect input/output operations to the virtualized resources. If a particular processor architecture has instructions that cannot be trapped but whose behavior needs to be augmented for virtualization, dynamic binary rewriting may be used to replace instances of these instructions with explicit trap instructions. Alternatively, the virtual machine monitor may simulate a processor, evaluating each operation and passing the operation onto the processor, but doing so greatly slows operation. However, passing operation of the virtual machine directly to the processor permits a virtual machine to operate without having to virtualize a processor during all operations.

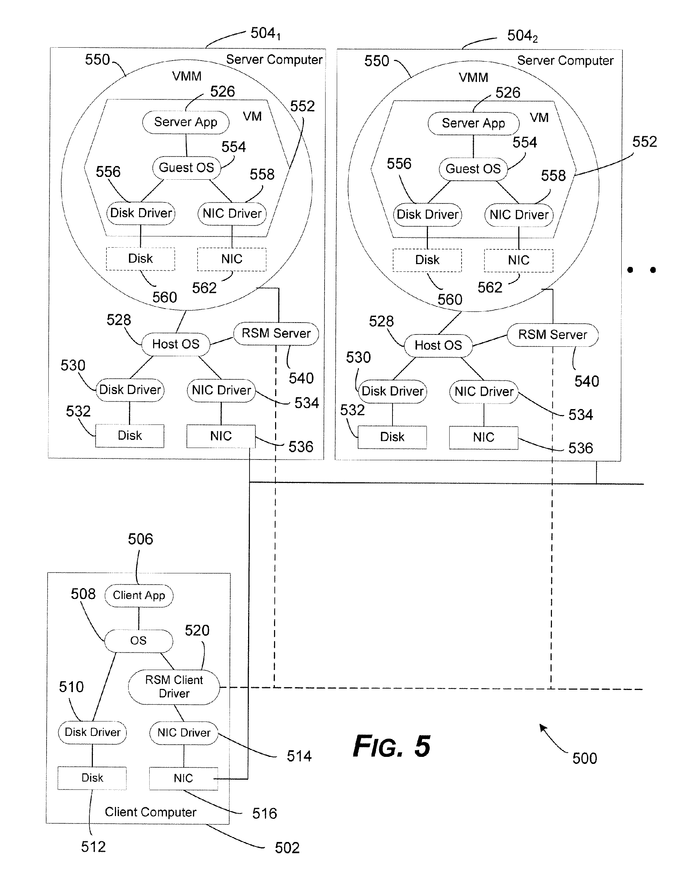

FIG. 5 shows a computer system 500 utilizing virtual machine monitors in accordance with an embodiment of the invention. The computer system 500 includes a client computer 502 having similar components to the client computer 202. That is, the client computer includes a client application 506, an operating system 508, a disk driver 510, a disk 512, a NIC driver 514, and a NIC 516. A RSM client driver 520 serves a similar function to the RSM client substrate 220 described above. In use, network messages to and from the client application 506 are intercepted by the RSM client driver 520, which performs sent-message replication and receive-message aggregation as described above.

The computer system 500 also includes server computer 504. As an alternative to the system shown in FIG. 5, a redirector computer, as described above, may be used instead of the RSM client driver 520. In such an embodiment, the redirector computer acts as a liaison between the client computer 502 and the server computers 504₁ and 504₂.

Although only a single client computer 502 is shown, several may be included in the computer system 500. Likewise, although only two server computers 504 are shown, more are contemplated, as indicated by the dots following the second server computer 504₂.

The server computers 504₁, 504₂, similar to the server computers 204₁, 204₂, each include an operating system 528, in this case a host operating system 528, a disk driver 530, a disk 532, a NIC driver 534, and a NIC 536. In addition, an RSM server substrate 540 is present on each of the server computers 504₁, 504₂. In addition, in accordance with an embodiment, the server computers 504₁, 504₂ include virtual machine monitors (VMM) 550 for communicating between the host operating system 528 and a virtual machine (VM) 552 in the server computer 504. The virtual machine 552 includes a server application 526, a guest operating system 554, a disk driver 556, and a NIC driver 558.

Although the server computers 504₁, 504₂ have components with similar reference numerals, components of the different computers may be different. For example, the host operating systems 528, 554 may be different, as may the processor or hardware architecture.

The virtual machine monitor 550 presents virtualized resources to the virtual machine 552. For example, it presents a virtualized disk 560 and a virtualized NIC 562. The virtual machine monitor 550 implements virtualized storage resources using the real storage resources it accesses through the host operating system 528, and it implements virtualized communication resources using the real communication resources it accesses through the host operating system. For example, the virtualized machine monitor 550 presents a virtual disk 560 to the virtual machine 552, and it uses the physical disk 532 as a backing store for this virtual disk. Similarly, the virtualized machine monitor 550 presents the virtual network card 562 to the virtual machine 552, and it uses the physical network card 536 to send and receive packets on behalf of the virtual network card.

The RSM server substrate 540 communicates with the virtual machine monitor 550, which, in accordance with an embodiment of the invention, is configured to cause the server application 526 to act as a deterministic state machine following an interface such as that described above with the prior art system in FIG. 4. To do so, as further described below, the virtual machine monitor 550 and the RSM server substrate 540 cause the virtual machine 552 to emulate state machine behavior.

In accordance with an embodiment, the virtual machine 552 is not written as a deterministic state machine. Instead, the virtual machine monitor 550 and the RSM server substrate 540 are configured so that actions of the virtual machine 552 are so constrained as to be a deterministic state machine.

Because the virtual machine 552 is not a state machine, employing the agreement/execution pattern shown in FIG. 3 is difficult. Instead of this agreement/execution pattern, in accordance with an embodiment, the server application 526 and guest operating system 554 execute with apparent continuity, and messages or other events arrive in an apparently asynchronous fashion. To achieve this effect, the agreement protocol of FIG. 3 is used in a different way. In accordance with an embodiment, time is partitioned into a sequence of discrete intervals, and within each interval, the agreement protocol determines whether any messages are to be processed and, if there are any, the order in which to process them. As is described further below, the concept of time here does not necessarily mean actual real time, and may be measured in other ways, as one example by the number of executions instructions performed by the virtual machine 552.

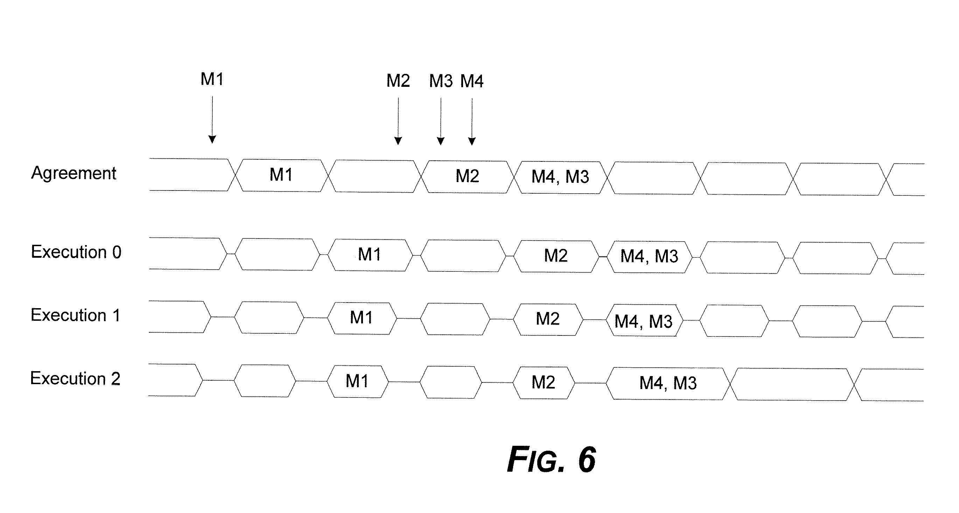

An example of a timing diagram for tasks handled by the RSM server substrate 540 is shown in FIG. 6. In FIG. 6, the downward-pointing arrows indicate messages that may include, for example, one or more requests for operations. Each message may contain a request for an operation, or a message might contain a request for multiple operations, or the messages might have no well-defined semantic relationship to operations. In this example, a message has a one-to-one relationship with a request for an operation.

During the agreement interval that begins after the agreement interval in which the message M1 arrives, the RSM server substrate 540 decides per its agreement protocol that the next execution interval will include the message M1. Since no message arrives during the agreement interval while the message M1 is being handled via the agreement protocol, the RSM server substrate 540 decides that the following execution will include no messages. During that agreement interval, the message M2 arrives, and so during the following agreement interval, the RSM server substrate 540 decides that the next execution will include the message M2. During that agreement interval, messages M3 and M4 arrive, and so during the following agreement interval, the RSM server substrate 540 decides that the next execution will include messages M3 and M4, and it decides that the order of these messages will be M4 followed by M3.

Once the agreement protocol completes its decision, the virtual machine 552 is allowed to execute for a determinate length of execution. The length of execution is the same for each virtual machine 552, and this process is herein referred to as "deterministic execution chunking." Length of execution is chosen because it will cause each virtual machine to execute to the same state. In contrast, using real time might cause virtual machines 552 on different server computers 502 to execute to different point in their code, since the real timing of clock cycles and instructions is variable. As one example of how to execute for a determinate length of execution, a count of processor instructions may be used. However, any other method that produces a deterministic result may be utilized.

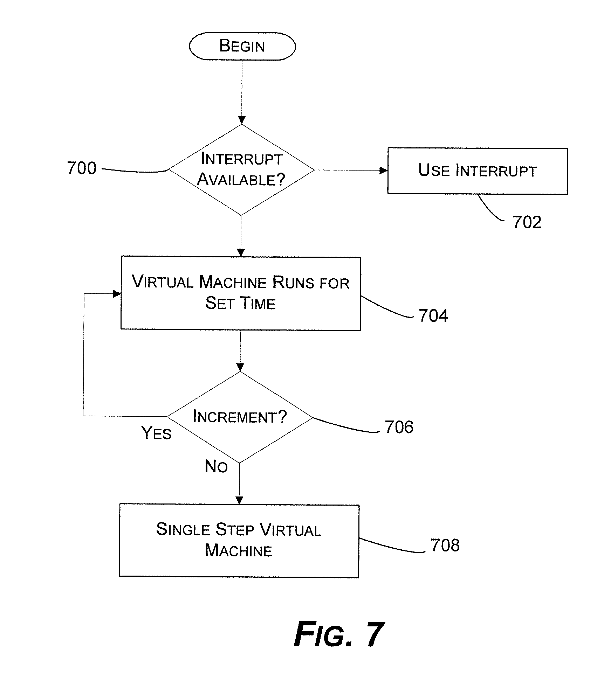

The specific mechanism by which the virtual machine 552 is allowed to run for a determinate length of execution (i.e., to perform deterministic execution chunking to a target amount of execution) may be determined in part by the processor architecture. FIG. 7 shows a flow chart generally describing steps for choosing a mechanism in accordance with an embodiment of the invention. Beginning at step 700, a determination is made whether the processor has an interrupt or similar mechanism that can be triggered after a certain count of retired instructions. If so, step 700 branches to step 702, where the interrupt is used. In such an architecture, the interrupt is simply set to trigger after the target amount of execution.

If the processor has no direct mechanism for running for a determinate length of execution, than step 700 branches to step 704, where the virtual machine 552 is allowed to run for a length of time that is guaranteed to perform no more execution than the target amount. This length of time may be calculated, for example, by knowing a length of time a target amount takes to execute when it has all of an efficient processor's resources and setting the target amount to less than that time period, for example to 80% of that time period.

The amount may need to be changed as processor speed increases over time, and could be different for different server computers 204. In an embodiment, different time periods may be utilized on different server computers 204, and feedback regarding efficiency may be provided to the server substrates 540. This feedback may be used to tune later time approximations, ultimately resulting in a more efficient process.

At step 706, a determination is made whether the target execution point is far enough away so that additional time periods of execution may be used. As an example, in the original operation in step 704, the processor may be instructed to run for a second. If, for example, only sixty percent of execution is done during that period of time, a determination may be made at step 706 to loop back to step 704 and run for another, shorter length of time, such as a tenth of a second. This process may continue until the target is sufficiently close (e.g., 100,000 instructions away). Moreover, the lengths of time can be progressively smaller as the target amount is approached. After the incrementing stage of step 706, the process branches to step 708, where the virtual machine 552 is single-stepped to the target execution point, for example by setting the processor's trap flag to single step the processor.

As an alternative to the decisions provided in FIG. 7, dynamic binary rewriting may be utilized to rewrite some of the code within the virtual machine 552, so that that code is modified within the virtual machine 552 prior to being handed to the processor. By altering the binary code provided to the processor, additional functionality may be provided so that the number of instructions that are run by the processor may be tracked. For example, within the binary code, counts may be maintained and may be incremented after a set number of instructions. This use of counts is a well-known technique in the field of binary rewriting. The set number is usually a "basic block," not a pre-established number of instructions, but instead a linear sequence of instructions bounded by a jump. These counts may be used to determine whether a target execution point has been reached or is approaching. Instructions may then be issued for the virtual machine 550 to cease operation after the count has been reached (if the count is exact), or single stepping may occur if the target amount is sufficiently close.

Binary rewriting typically slows processing significantly less than single stepping. Thus, a hybrid of binary writing and single stepping or a hybrid of running for a set time, binary writing, and single stepping may be used so as to minimize resource use and/or lag. As another alternative, single stepping of the processor may begin from the beginning, but because of the above-described slowdown in processing, this is an expensive option.

As another alternative, which is also expensive, a less conservative estimate of execution time for the virtual machine 552 may be permitted, even if that time permits the processor to exceed the target execution point. Because the state of the processor is tracked, the processor may be configured such that, when the target execution is exceeded, modifications may be undone back to the target execution point. Again, however, this alternative may be an expensive one.

Thus, a variety of different ways may be used to cause a virtualized processor to behave deterministically. One or more of these alternatives may be used so that the virtual machine 552 may run deterministically.

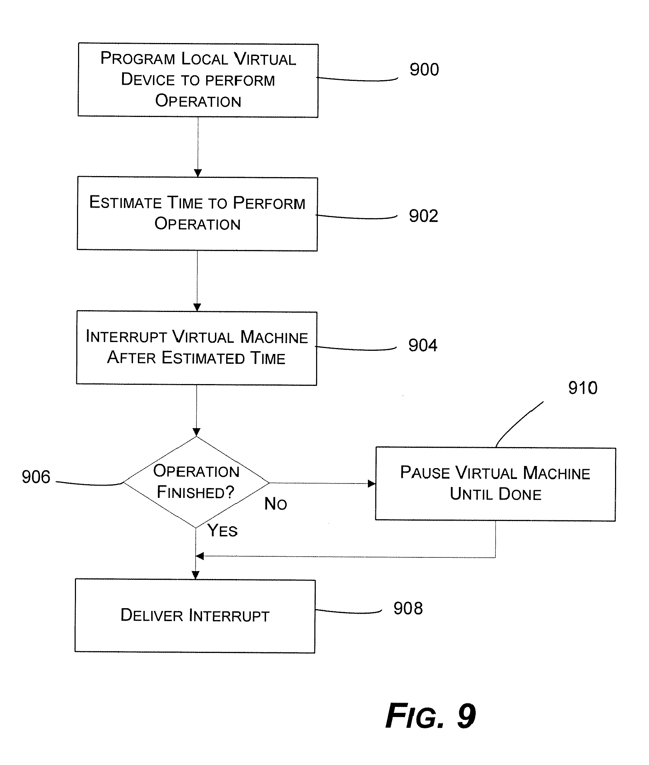

Once a mechanism is established for how to run for a determinate length of execution, this mechanism may be used with the agreement protocol established by the RSM server substrate 540 for handling network interrupts. FIG. 8 generally shows process steps for an agreement protocol for a network interrupt in accordance with an embodiment. Beginning at step 800, an execution interval is started. If the execution interval includes no incoming messages, then step 802 branches to step 804, where the virtual machine monitor 550 begins the execution interval by resuming the virtual machine 552 at the execution point from which it was previously interrupted. If the execution interval includes one or more incoming messages as determined by the agreement protocol, then step 802 branches to step 806, where the virtual machine monitor 550 delivers the message or messages to the virtual machine 552. To do so, the virtual machine monitor 550 may vector to the virtual machine's handling routine for interrupts from the virtual NIC 562. At step 808, the virtual machine 552 completes handling of the interrupts for all messages in the current execution interval. The process then loops back to step 804, where the normal interrupt return causes the virtual machine 552 to resume at the execution point from which it was interrupted.

Thus far, network interrupts and how they are handled by embodiments of the inventions have been discussed. Similar devices whose behavior is nondeterministic typically because the devices involve some external input, such as network communication, may be handled in a similar manner. These devices are referred to herein as "network virtual devices," although the devices may be local. There are other types of interrupts that are also not typically delivered deterministically to the virtual machines 552. Examples are local virtual devices, such as a disk 560, and a virtual real time clock. Methods for handling such devices are described below.

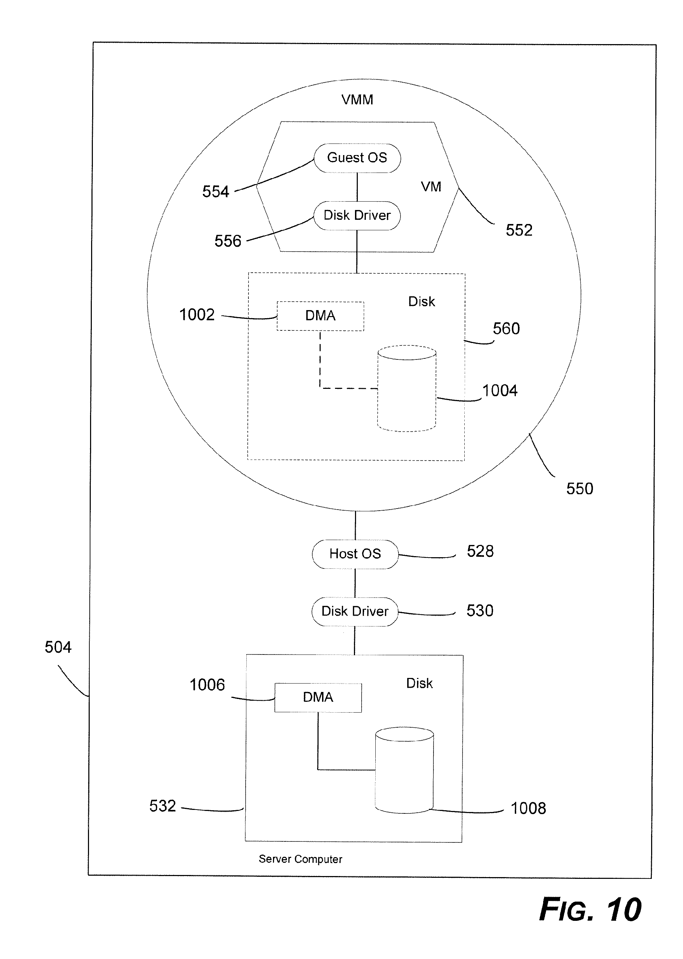

FIG. 9 shows exemplary steps for handling interrupts from local virtual devices, such as a disk, in accordance with an embodiment. Similar devices, whose behavior is deterministic but whose timing might not be, may be treated similarly. These devices are referred to herein as "local virtual devices," although such devices are not necessarily local.

Beginning at step 900, a local virtual device, such as the disk 560, is programmed by the virtual machine 552 to perform an operation. At step 902, the virtual machine monitor 550 estimates the time (i.e., the length of execution) to perform the operation. This estimate is performed deterministically so that all virtual machines 552 utilize the same time estimate. At step 904, the virtual machine is interrupted after the estimated period of time.

At step 906, a determination is made whether the operation has been finished. If so, step 906 branches to step 908, where the interrupt for the operation is delivered to the virtual machine 552. If not, then step 906 branches to step 910, where the virtual machine is paused until the operation is complete. The process then proceeds to step 908, where the interrupt is delivered.

FIG. 10 is utilized for an example of a local virtual device and handling of interrupts. The figure illustrates a more detailed view of the virtual and physical disk subsystems of the server computer 504 of FIG. 5. The virtual machine monitor 550 includes similar components, but the virtual disk 560 is broken into virtual direct memory access (DMA) 1002 and virtual storage 1004. Similarly, the actual disk 532 is broken into actual direct memory access (DMA) 1006 and actual storage 1008.

When the disk driver 556 in the virtual machine 552 wants to read data from the virtual disk 560, it programs the virtual direct memory access 1002 with the read request and it expects to be interrupted after the direct memory access has transferred the indicated data from the virtual disk into the memory of the disk driver 556. The virtual machine monitor 550 implements this behavior by performing a corresponding read operation to the physical disk, using the physical disk direct memory access 1006 and the physical disk driver 530, accessed through the host operation system 528.

In a conventional virtual machine monitor, when the physical read operation completes, the virtual machine monitor interrupts the virtual machine to indicate the completion of the virtual disk read. The physical disk takes an indeterminate amount of time to perform the read operation. In accordance with the present invention, however, the process should exhibit deterministic behavior to satisfy the requirements of a replicated state machine.

To do so, the time estimate process shown in FIG. 9 is utilized. When the virtual direct memory access 1002 is programmed to perform an operation, the virtual machine monitor 550 deterministically estimates the length of virtual machine execution that will elapse while the direct memory access operation is performed, and executes the virtual machine 552 for that period of time before checking to see if the operation is complete.

The estimate is performed for efficiency. As an alternative, the virtual machine monitor 550 may pause the virtual machine 552 immediately after programming the virtual direct memory access 1002 to perform the operation; this alternative corresponds to using a time estimate of zero. As such, the virtual machine would wait until the physical read operation completes, at which point the virtual machine monitor 550 would deliver the virtual direct memory access interrupt to the virtual machine 552. However, immediately stopping the virtual machine 552 or stopping the virtual machine for a very short period of time reduces the virtual machine's computation rate by preventing the virtual machine from overlapping computation with I/O delays, and results in undesirable latency. While the zero-time estimate approach is deterministic, and could be used, the time estimate method described herein is more efficient. The estimate used may be as crude as a constant (e.g., every operation is estimated to take 500,000 processor instructions), or it may be computed based upon the size of the data, or it may be computed using a model parameterized by any other data available deterministically, that is, data from within the virtual machine. Regardless of how it is computed, the estimate is based on a deterministic value that is known by all copies of the virtual machines 552. In this example, that value may involve the transfer size.

Using the techniques as described above in respect to the processor, the virtual machine monitor 550 then interrupts the virtual machine 552 after the indicated length of execution. If the physical read operation is already completed (because the estimate was high), then the virtual machine monitor 550 delivers the virtual direct memory access interrupt to the virtual machine 552. If the physical read operation has not yet completed (because the estimate was low), then the virtual machine monitor 550 pauses the virtual machine 552 and does not resume it until the physical read operation completes, at which point it delivers the virtual direct memory access interrupt to the virtual machine.

As described above, use of a non-zero estimate increases efficiency of the virtual machine 552. In addition, the system operates more efficiently with increasing accuracy of the estimate. A high estimate reduces the disk's data transfer rate to the virtual machine 552. A low estimate reduces the virtual machine's computation rate.

Having set forth methods to deal with local devices and networks, most items can be handled with respect to these two methods. For example, items that behave deterministically, i.e., the items' behavior as seen by the virtual machine is not altered by processes outside the virtual machine, may be treated as local virtual devices. Many of these may be resident on a server computer 504₁, 504₂, such as a tape drive or CD-ROM drive. However, the devices may not be local. As an example, a remote read-only network volume may be treated as a local virtual device. As other examples, a hardware accelerator for performing vector math, or a cryptographic engine (such as a smartcard), may be treated as local virtual devices. Peripheral devices and remotely located devices can be treated like network virtual devices.

Another issue to address with respect to interrupts is the need for a clock. Physical computers typically provide a real-time clock (RTC) register that may be read by the operating system. Physical computers also typically provide a periodic clock interrupt, which is used, among other things, to timeshare the processor among several processes. For the virtual machines 550, a clock is needed to divide execution time as discussed with the description accompanying FIG. 6. In addition, for each of the virtual machines 552, operation must be interrupted at the same execution point, and all virtual machines should read identical clock values.

In accordance with an embodiment, a periodic virtual clock interrupt is provided that is deterministic with respect to the virtual machine's execution. This clock interrupt is used as a clock for the virtual machine 552, albeit not in real time. In accordance with the embodiment, the interrupt is triggered after a fixed length of virtual machine execution, using a technique such as that described above in the description accompanying FIG. 7. That is, available interrupts, binary rewriting, single stepping, time estimating, virtualizing of a processor by the virtual machine monitor 550, or any combination of these may be used. Thus, time is measured with respect to execution instead of actual real time.

For example, if the virtual machine 552 expects to be interrupted approximately once per millisecond, and the processor executes roughly one hundred million instructions per second, then a clock interrupt may be delivered to the virtual machine every one hundred thousand instructions. This approach guarantees determinate execution, and it provides interrupts at the required frequency for effective timesharing.

Because instructions are handled at different rates by different computers, the interrupts most likely will occur at intervals that are irregular with respect to real time. In accordance with an embodiment, a virtual real-time clock is provided that is deterministic with respect to the virtual machine's execution. In the embodiment, the virtual real-time clock value is the value of the execution counter of the virtual machine 552, which may be a retired-instruction counter or whatever execution counter is available on the particular processor architecture. Thus, in the case of a retired-instruction counter, if the one-billionth instruction that the virtual machine executes is a read of the real-time clock, then the value returned will be one billion. If the processor architecture has an execution counter with a small number of bits, such that it risks wrapping, this counter may be extended in software using a well known technique.

In the description provided above, the real-time clock functions as a local virtual device. The virtual real-time clock may not track actual real time very well, due to variability in the execution rate of the virtual machine. If the server application 526 requires a better actual real-time clock, the guest operating system 554 in the virtual machine 552 may participate in any standard clock synchronization protocol, such as network time protocol (NTP), with a computer that has a more accurate real-time clock. The computer that provides the time-synchronization information can either include a RSM client driver, such the as the RSM client driver 520, or interact with a redirector computer, as described above.

The interrupts associated with the virtual clock, the local devices, and the virtual network connections described above are each related to the execute call 400 (FIG. 4) of the RSM server substrate 240. As described above with the description of FIG. 4, there are also replies that are sent by the server application 526 to the RSM server substrate 240, and the state of the server application 526 needs to be tracked and transmitted to the RSM server substrate 240.

In conventional replicated state machines, communications between client and server has a remote-procedure-call (RPC) structure. The client makes the request, and this request is ordered consistently along with requests from other clients. The server executes the request, and the server replies to the client. Thus, the reply call 402 (FIG. 4) is typically invoked once per state update, to send the requesting client a reply to the request that initiated the state update.

In accordance with an embodiment, arbitrary applications are supported for use as the server applications 526, even though the applications may not have been written with an RPC communication structure. In accordance with this embodiment, the server application 526 may send a message to a client in a manner that bears no obvious relationship to the request it received from the client. In accordance with an embodiment, the messages are handled from the server in a straightforward manner: they are sent to the client or the redirector immediately. When the RSM client driver 520 or a similar envoy (e.g., in a redirector environment) receives a sufficient number of copies of a message from the server applications 526, the RSM client driver or redirector passes the message on to the client application 506. Message ordering is provided by the network layer inside the virtual machine and at the redirector or client driver, such as a reliable transport layer (e.g., TCP); the present invention requires no special consideration to provide message ordering.

In addition, the RSM server substrate 540 needs to track the state at the replicated application 526. In accordance with an embodiment, this state includes the state of both the virtual machine monitor 550 and the virtual machine 552.

The state of the virtual machine monitor 550 may be handled in the same manner as most replicated state machines. That is, the code for this portion of the system may use the modify call 404 (FIG. 4) before it changes any of its state. In addition, it may appropriately implement the get and put call interfaces 406 and 408. In addition, the virtual machine monitor 550 should persistently and atomically record its state in response to a checkpoint call 410. There are well known techniques for each of these operations and the operations are standard in the world of replicated state machines.

To track changes to the virtual machine's memory, a known copy-on-write technique may be used. The virtual machine monitor 550 sets the protection bits on the virtual machine's memory to non-writable at the beginning of each checkpointable interval. The checkpoint interval will likely be longer than the execution interval. Thus, when the virtual machine 552 executes a write instruction, this execution causes a trap to the virtual machine monitor 550. The virtual machine monitor 550 then uses the *modified* call 404 to inform the RSM server substrate 540 that the indicated memory page is being modified. The virtual machine monitor 550 implements the get and put call interfaces 406, 408 to the virtual machine's memory by reading or writing the indicated page. Lastly, the virtual machine monitor 550 checkpoints the virtual machine's memory by recording the values of the virtual machine pages that have been modified.

In addition to the state of both the virtual machine monitor 550 and the virtual machine 552, the state of the processor for the server computer 504 should also be tracked including such things as registers and program counters and other information stored with respect to processors as is known in the replicated state machine art. Also, the state of the disk 532 and the disk driver 530 are tracked. Any state associated with the server computer 504 that would have an effect on restoring the server application and virtual machine to a given point is tracked.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A computer system comprising:
a host operating system;
an application;
a nondeterministic virtual machine hosting the application; and
a virtual machine monitor for communicating between the virtual machine and the host operating system, the virtual machine monitor being configured to provide deterministic behavior characteristics for the virtual machine and the application.

2. The computer system of claim 1, wherein the virtual machine monitor is configured, in response to a request for execution, to allow execution of the virtual machine a first deterministic length of execution.

3. The computer system of claim 2, further comprising a processor, and wherein the virtual machine monitor is configured to allow execution of the virtual machine the first deterministic length of execution by utilizing a mechanism on the processor for setting execution length.

4. The computer system of claim 2, further comprising a processor, and wherein the virtual machine monitor is configured to allow execution of the virtual machine the first deterministic length of execution by allowing the virtual machine to run for a deterministic length of time, and then single stepping the processor until the first deterministic length of execution is reached.

5. The computer system of claim 4, wherein the deterministic length of time is a length of time that is determined so as to perform no more execution than the first deterministic length.

6. The computer system of claim 4, wherein the virtual machine monitor is further configured to allow execution of the virtual machine by allowing the virtual machine to run for a second deterministic length of execution of time after execution of the first deterministic length of execution and prior to single stepping of the processor.

7. The computer system of claim 6, wherein the second deterministic length of execution is less than the first deterministic length of execution.

8. The computer system of claim 2, wherein the virtual machine monitor is configured to allow execution of the virtual machine the first deterministic length of execution by binary rewriting at least a portion of code for the virtual machine.

9. The computer system of claim 1, wherein the virtual machine monitor is configured, in response to the virtual machine programming a local virtual device to perform an operation, to allow operation of the virtual machine a deterministic amount of time.

10. The computer system of claim 9, wherein the virtual machine monitor is further configured, after operation of the virtual machine the deterministic amount, if the operation is not completed, to pause operation of the virtual machine until the operation is completed.

11. The computer system of claim 1, further comprising a periodic virtual clock interrupt that is triggered after a fixed length of execution of the virtual machine.

12. The computer system of claim 1, further comprising a virtual real-time clock having a value based upon a value of the execution counter of the virtual machine.

13. A computer-readable medium having thereon computer-executable instructions for performing a method, the method comprising:
providing a computer having a nondeterministic virtual machine hosted thereon; and
responsive to a request for execution of the virtual machine, successively incrementing execution of the virtual machine a first deterministic length of execution.

14. The computer-readable medium of claim 13, wherein executing the virtual machine the first deterministic length of execution comprises utilizing a mechanism on a processor for setting execution length.

15. The computer-readable medium of claim 14, wherein executing the virtual machine the first deterministic length of execution comprises allowing the virtual machine to run for a deterministic length of time, and then single stepping operation until the first deterministic length of execution is reached.

16. The computer-readable medium of claim 13, wherein executing the virtual machine the first deterministic length of execution comprises dynamic binary rewriting at least a portion of code for the virtual machine, single stepping of operation of the virtual machine, executing of the virtual machine for a deterministic length of execution, or subsets thereof.

17. A computer-readable medium having thereon computer-executable instructions for performing a method, the method comprising:
providing a computer having a nondeterministic virtual machine hosted thereon; and
in response to the virtual machine programming a local virtual device to perform an operation, operating the virtual machine a deterministic amount of time.

18. The computer-readable medium of claim 17, wherein the deterministic amount of time is estimated deterministically.

19. The computer-readable medium of claim 17, further comprising, after operation of the virtual machine the deterministic amount, if the operation is completed, delivering an interrupt for the operation to the virtual machine.

20. The computer-readable medium of claim 17, further comprising, after operation of the virtual machine the deterministic amount, if the operation is not completed, pausing operation of the virtual machine until the operation is completed.
